# EUROPEAN PATENT APPLICATION

(11) **EP 4 151 943 A1**
(43) Date of publication of application: **22.03.2023**
(21) Application number: 21196802.9
(22) Date of filing: 15.09.2021
(51) Int. Cl.: F28D 15/02, H01H 9/52, H02B 1/56, H02G 5/10

(54) **COOLING APPARATUS FOR A MEDIUM VOLTAGE OR HIGH VOLTAGE SWITCHGEAR**

(71) Applicant: ABB SCHWEIZ AG, 5400 Baden (CH)
(72) Inventor: SOLOGUBENKO, Oleksandr, 8906 Bonstetten (CH); STADNICKI, Adrian, 40883 Ratingen (DE); ZITZMANN, Robby, 40822 Mettmann (DE); TORRESIN, Daniele, 5400 Baden (CH); KHEIRI, Pedram, 5212 Hausen (CH); KESSLER, Michael, 42579 Heiligenhaus (DE)
(74) Representative: Maiwald GmbH

(57) **Abstract**

The present invention relates to a cooling apparatus for a medium voltage or high voltage switchgear, the cooling apparatus comprising: an evaporator section (2); a fluid conduit (3); a fluid phase separator (4); and a condenser section (5);
wherein, the evaporator section is configured to contact at least part of a current carrying contact;
wherein, the evaporator section is configured such that liquid fluid within the evaporator section can thermally contact an outer surface of the current carrying contact;
wherein, the evaporator section is fluidly connected to the fluid conduit;
wherein, the fluid conduit is fluidly connected to the condenser section;
wherein, the fluid phase separator comprises a part (4a) positioned within a portion of the fluid conduit adjoining the evaporator section;
wherein, the part of the fluid phase separator positioned within the portion of the fluid conduit adjoining the evaporator section comprises an open ended hollow tube-like shape, and wherein an outer surface of the tube-like shape is spaced from an inner surface of the fluid conduit to form a first channel and wherein the centre of the tube-like shape forms a second channel; and
wherein, the cooling apparatus is configured such that in use:
- the liquid fluid in the evaporator section is heated to a vapour state,
- the vapour is transferred from the evaporator section to the fluid conduit at least partially via the second channel,
- the vapour is transferred by the fluid conduit to the condenser section,
- the vapour in the condenser section is condensed to the liquid fluid, and
- the condensed liquid fluid is passively returned via the fluid conduit to the evaporator section at least partially via the first channel.

## Description

### FIELD OF THE INVENTION

The present invention relates to a cooling apparatus for a medium voltage or high voltage switchgear, a fluid phase separator for a cooling apparatus for a medium voltage switchgear, and a method of cooling at least one part of a medium voltage or high voltage switchgear with a cooling apparatus.

### BACKGROUND OF THE INVENTION

As compartments of gas insulated switchgears are fully sealed, heat dissipation due to losses is one of the major tasks of thermal management of the switchgear - also called a panel. For high current ratings in medium voltage and high current switchgears passive cooling elements are used such as heat sinks or gas coolers. A more compact solution with very high efficiency consists of heat pipes or thermosyphons. They are able to deduct heat from a dedicated hot spot to areas with lower temperature.

The conductors producing heat often have cylindric shape and are oriented horizontally. Such cases can be, for example, horizontal bushings, tubular busbars, or pole parts of a circuit breaker. In these cases, it is advantageous for the thermosyphon to have a ring-shaped evaporator, surrounding the conductor. This way, the surface of the conductor is cooled more evenly.

As discussed above, the gas insulated switchgear compartments require cooling devices, which are compact and have high heat transfer capabilities. Passive solutions, that is that do not rely on active fluid circulation by fans or pumps, are often preferred. Thermosyphons combine all the required features listed above. A thermosyphon allows to transfer large heat loads by means of circulation of a specially selected dielectric fluid. The working fluid is placed inside of the sealed volume. The liquid fluid boils in an evaporator in thermal contact with the electric conductors inside the enclosure of the switchgear, condenses in a condenser at ground potential outside of the enclosure, and returns as liquid to the hot conductors by gravity force. However, thermosyphons cannot always operate at the high heat loads required.

There is a need to address this issue.

### SUMMARY OF THE INVENTION

Therefore, it would be advantageous to have an improved technique to cool internal parts of a medium voltage or high voltage switchgear that become hot due to current flow. Such a part is for example a part of a circuit breaker.

The object of the present invention is solved with the subject matter of the independent claims, wherein further embodiments are incorporated in the dependent claims.

In a first aspect, there is provided a cooling apparatus for a medium voltage or high voltage switchgear, the cooling apparatus comprising:
- an evaporator section;
- a fluid conduit;
- a fluid phase separator; and
- a condenser section.

The evaporator section is configured to contact at least part of a current carrying contact. The evaporator section is configured such that liquid fluid within the evaporator section can thermally contact an outer surface of the current carrying contact. The evaporator section is fluidly connected to the fluid conduit. The fluid conduit is fluidly connected to the condenser section. The fluid phase separator comprises a part positioned within a portion of the fluid conduit adjoining the evaporator section. The part of the fluid phase separator positioned within the portion of the fluid conduit adjoining the evaporator section comprises an open ended hollow tube-like shape. An outer surface of the tube-like shape is spaced from an inner surface of the fluid conduit to form a first channel and the centre of the tube-like shape forms a second channel. The cooling apparatus is configured such that in use:
- the liquid fluid in the evaporator section is heated to a vapour state,
- the vapour is transferred from the evaporator section to the fluid conduit at least partially via the second channel,
- the vapour is transferred by the fluid conduit to the condenser section,
- the vapour in the condenser section is condensed to the liquid fluid, and
- the condensed liquid fluid is passively returned via the fluid conduit to the evaporator section at least partially via the first channel.

In this way, the cooling apparatus can cool the current carrying contact of a medium voltage or high voltage switchgear and entrainment, where vapour flow away from the evaporator can inhibit the return of liquid to the evaporator is mitigated, and the performance range of the thermosyphon can be extended to higher heat loads.

In an example, the cooling apparatus is or comprises a thermosyphon.

Thus, a heat pipe or thermosyphon is provided where the condensing section can be outside the switchgear enclosure or have a part outside the enclosure or be part of the other surface of the enclosure and operation at increased heat loads is enabled.

In an example, the evaporator section is configured to surround at least part of the current carrying contact.

In an example, the evaporator section is configured such that the liquid fluid within the evaporator section can contact the outer surface of the current carrying contact.

In an example, the fluid phase separator comprises a second part positioned within a portion of the evaporator section adjoining the fluid conduit. An outer surface of the second part facing away from the at least part of the current carrying contact is spaced from an inner surface of the evaporator section to form a third channel fluidly connected to the first channel. An inner surface of the second part facing toward the at least part of the current carrying contact is spaced from an inner surface of the evaporator section and/or spaced from an outer surface of the at least part of the current carrying contact to form a fourth channel fluidly connected to the second channel. The cooling apparatus is configured such that in use the vapour is transferred from the evaporator section to the fluid conduit at least partially via the fourth channel and the condensed liquid fluid is passively returned via the fluid conduit to the evaporator section at least partially via the third channel.

In an example, the second part of the fluid phase separator comprises a curved shape.

In an example, the curved shape is configured to conform to a cylindrical shape of the current carrying contact.

In an example, the second part of the fluid phase separator comprises at least one hole or tube or slot connecting the outer surface of the second part to the inner surface of the second part. The condensed liquid fluid is passively returned via the fluid conduit to the evaporator section at least partially via the at least one hole or tube or slot.

In an example, the part of the fluid phase separator positioned within the portion of the fluid conduit comprises a cylindrical or conical shape.

In a second aspect, there is provided a fluid phase separator for a cooling apparatus for a medium voltage switchgear. The cooling apparatus comprising: an evaporator section, a fluid conduit, and a condenser section. The evaporator section is configured to contact at least part of a current carrying contact. The evaporator section is configured such that liquid fluid within the evaporator section can thermally contact an outer surface of the current carrying contact. The evaporator section is fluidly connected to the fluid conduit. The fluid conduit is fluidly connected to the condenser section. The fluid phase separator comprises a part configured to be positioned within a portion of the fluid conduit adjoining the evaporator section, and the part comprises an open ended hollow tube-like shape. An outer surface of the tube-like shape is configured to be spaced from an inner surface of the fluid conduit to form a first channel and the centre of the tube-like shape is configured to form a second channel. The fluid phase separator is configured such that in use with the cooling apparatus:
- the liquid fluid in the evaporator section is heated to a vapour state,
- the vapour is transferred from the evaporator section to the fluid conduit at least partially via the second channel,
- the vapour is transferred by the fluid conduit to the condenser section,
- the vapour in the condenser section is condensed to the liquid fluid, and
- the condensed liquid fluid is passively returned via the fluid conduit to the evaporator section at least partially via the first channel.

Thus, an existing thermosyphon can be improved to enable operation at higher heat loads, by opening it and inserting a fluid phase separator at the appropriate part of the thermosyphon at the junction between the evaporator and fluid conduit.

In an example, the fluid phase separator comprises a second part configured to be positioned within a portion of the evaporator section adjoining the fluid conduit. An outer surface of the second part facing away from the at least part of the current carrying contact is configured to be spaced from an inner surface of the evaporator section to form a third channel fluidly connected to the first channel. An inner surface of the second part facing toward the at least part of the current carrying contact is configured to be spaced from an inner surface of the evaporator section and/or spaced from an outer surface of the at least part of the current carrying contact to form a fourth channel fluidly connected to the second channel. The fluid phase separator is configured such that in use with the cooling apparatus the vapour is transferred from the evaporator section to the fluid conduit at least partially via the fourth channel and the condensed liquid fluid is passively returned via the fluid conduit to the evaporator section at least partially via the third channel.

In an example, the second part of the fluid phase separator comprises a curved shape.

In an example, the curved shape is configured to conform to a cylindrical shape of the current carrying contact.

In an example, the second part of the fluid phase separator comprises at least one hole or tube or slot connecting the outer surface of the second part to the inner surface of the second part. The fluid phase separator is configured such that in use with the cooling apparatus the condensed liquid fluid is passively returned via the fluid conduit to the evaporator section at least partially via the at least one hole or tube or slot.

In an example, the part of the fluid phase separator positioned within the portion of the fluid conduit comprises a cylindrical or conical shape.

In a third aspect, there is provided a method of cooling at least one part of a medium voltage or high voltage switchgear with a cooling apparatus, the cooling apparatus comprising:
- an evaporator section;
- a fluid conduit;
- a fluid phase separator; and
- a condenser section;
   wherein, the evaporator section is configured to contact at least part of a current carrying contact;
   wherein, the evaporator section is configured such that liquid fluid within the evaporator section can thermally contact an outer surface of the current carrying contact;
   wherein, the evaporator section is fluidly connected to the fluid conduit;
   wherein, the fluid conduit is fluidly connected to the condenser section;
   wherein, the fluid phase separator comprises a part positioned within a portion of the fluid conduit adjoining the evaporator section;
   wherein, the part of the fluid phase separator positioned within the portion of the fluid conduit adjoining the evaporator section comprises an open ended hollow tube-like shape, and wherein an outer surface of the tube-like shape is spaced from an inner surface of the fluid conduit to form a first channel and wherein the centre of the tube-like shape forms a second channel; and
   wherein, the method comprises:
- heating the liquid fluid in the evaporator section to a vapour state,
- transferring the vapour from the evaporator section to the fluid conduit at least partially via the second channel,
- transferring the vapour by the fluid conduit to the condenser section,
- condensing the vapour in the condenser section to the liquid fluid, and
- passively returning the condensed liquid fluid via the fluid conduit to the evaporator section at least partially via the first channel.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an evaporator and fluid conduit of a thermosyphon for cooling a cylindrical conductor that does not have a fluid phase separator;
Fig. 2 shows an evaporator and fluid conduit of a thermosyphon for cooling a cylindrical conductor that has a fluid phase separator inserted into the thermosyphon;
Fig. 3 shows diagrammatically the operation principle of the fluid phase separator;
Fig. 4 shows a variation of the fluid phase separator; and
Fig. 5 shows a variation of the fluid phase separator.

### DETAILED DESCRIPTION OF EMBODIMENTS

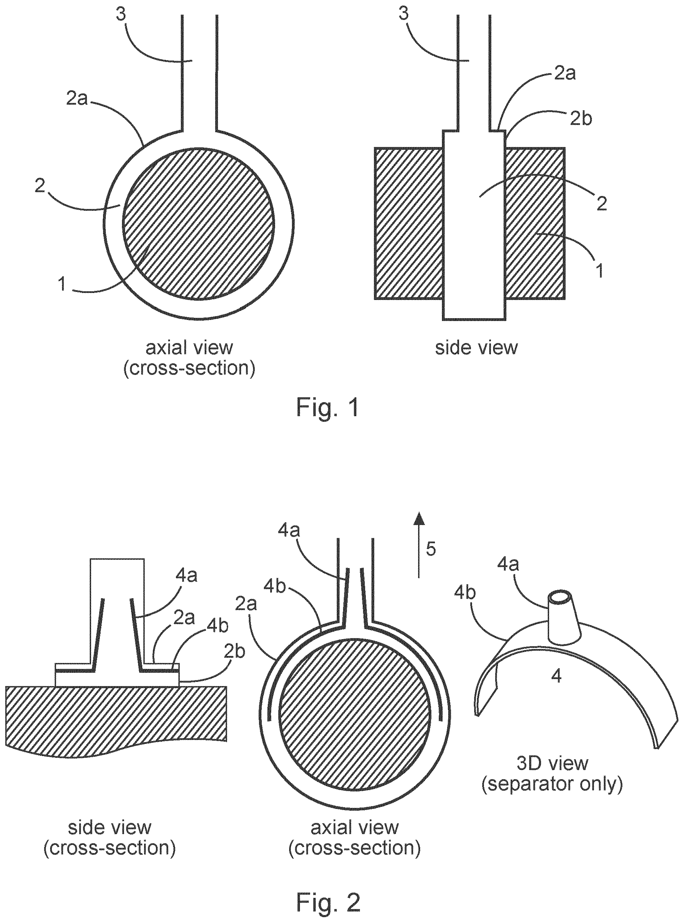

Fig. 1 shows an exemplar thermosyphon, that does not have a fluid phase separator. The ring-shaped evaporator 2, placed around conductor 1, is connected to the condenser 5 (not shown but vertically above) by a fluid-carrying conduit 3. In this schematic geometry of evaporator 2, one can distinguish wall 2a, which is coaxial with the cylindric conductor, and wall 2b, which is perpendicular to the axis of the conductor.

The flow of the liquid phase and the flow of the vapor phase are in opposite directions, both in the conduit **3** and in the upper part of the ring-shaped evaporator **2.** At high enough heat loads and at low enough temperatures, the interaction between the two phases can partly or completely block the circulation of fluid, preventing the liquid from reaching the hot conductor surface and, therefore, leading to a drop in thermosyphon performance. This defines an "entrainment limit", or "counter-current flooding limit". In the specific geometry of Fig. 1, the major counterflow resistance is in the area where the evaporator **2** is connected to the fluid conduit **3,** where the vapor flow changes the direction from horizontal to vertical with associated flow disturbances and liquid entrainment. The upper half of the evaporator ring also appears to be susceptible to entrainment, especially if the ring cross-section is small.

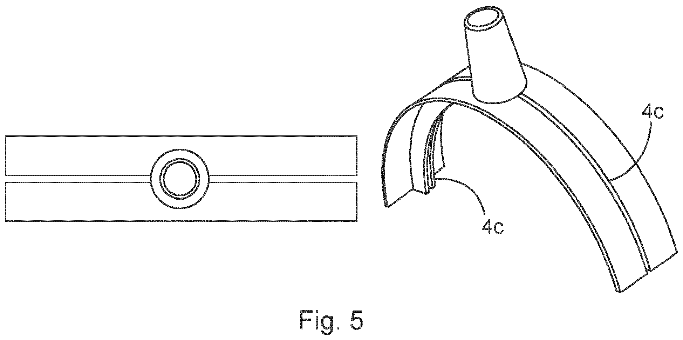

Figs. 2-5 relate to a cooling apparatus for a medium voltage or high voltage switchgear where a thermosyphon has a fluid phase separator, to such a fluid phase separator for a cooling apparatus for a medium voltage switchgear, and a method of cooling at least one part of a medium voltage or high voltage switchgear with a cooling apparatus where a thermosyphon has a fluid phase separator. The new geometry is similar to that shown in Fig. 1, except that a fluid phase separator is utilized.

An exemplar cooling apparatus for a medium voltage or high voltage switchgear comprises: an evaporator section 2, a fluid conduit 3, a fluid phase separator 4, and a condenser section 5. The evaporator section is configured to contact at least part of a current carrying contact. The evaporator section is configured such that liquid fluid within the evaporator section can thermally contact an outer surface of the current carrying contact. The evaporator section is fluidly connected to the fluid conduit. The fluid conduit is fluidly connected to the condenser section. The fluid phase separator comprises a part 4a positioned within a portion of the fluid conduit adjoining the evaporator section. The part of the fluid phase separator positioned within the portion of the fluid conduit adjoining the evaporator section comprises an open ended hollow tube-like shape. An outer surface of the tube-like shape is spaced from an inner surface of the fluid conduit to form a first channel and the centre of the tube-like shape forms a second channel. The cooling apparatus is configured such that in use:
- the liquid fluid in the evaporator section is heated to a vapour state,
- the vapour is transferred from the evaporator section to the fluid conduit at least partially via the second channel,
- the vapour is transferred by the fluid conduit to the condenser section,
- the vapour in the condenser section is condensed to the liquid fluid, and
- the condensed liquid fluid is passively returned via the fluid conduit to the evaporator section at least partially via the first channel.

In an example, the evaporator section is configured to completely surround the current carrying contact of a medium voltage switchgear. Thus, the evaporator section encircles the currying carrying contact.

In an example, the current carrying contact is configured to connect to a primary contact, that for example is configured to connect to a terminal of a circuit breaker of the switchgear.

In an example, the evaporator section is ring shaped.

In an example, the evaporator section comprises an insulating material such as thermoplastic.

In an example, the evaporator section comprises thermosetting and/or elastomer materials.

In an example, a part of the fluid conduit that is connected to the evaporator section is electrically insulating.

In an example, the evaporator section is configured to be affixed to a fixed contact or a movable contact of a circuit breaker of the medium voltage switchgear.

In this way, an efficient means is provided to cool a key component in a medium voltage switchgear that otherwise could become too hot.

In an example, the evaporator section is configured to slide over an end of the fixed contact or slide over an end of the movable contact.

In this manner, the cooling apparatus can be retrofitted to existing circuit breakers, where after positioning of the evaporator section it can be fixed in place for example with epoxy resin.

In an example, a part of the fluid conduit comprises a metallic bellows, such that the part of the fluid conduit comprising the metallic bellows can bend and/or extend longitudinally.

In this way, the cooling apparatus can deal with vibrations and/or be fitted to moving parts such as a movable contact of a circuit breaker. Thus, a condenser section of the cooling apparatus can be mounted externally to a compartment of a medium voltage switchgear, with the evaporator section mounted / fixed to a current carry part. The fluid conduit then pass through a wall of the compartment and can be mounted to the wall. However, positioned inboard of the wall, a bellows section of the fluid conduit provides for vibration isolation such that vibrations are prevented from passing from parts of the cooling apparatus inside the compartment to the condenser section outside.

In an example, a first part of the fluid conduit on the condenser section side of the part that comprises a metallic bellows is metal and a second part of the fluid conduit on the evaporator section side of the part that comprises a metallic bellows is metal, and wherein the first part is configured to be fixed to a wall of a compartment of the medium voltage switchgear.

In an example, at least part of the fluid conduit comprises a metallic tube.

In this manner, robustness of the apparatus is provided.

In an example, the condenser section is located at a higher elevation than the evaporator section.

Thus, the cooling apparatus can be a thermosyphon system where gravity is used to passively return condensed working fluid to the evaporator. The thermosyphon functioning can however be augmented via capillary action if necessary.

In an example, the evaporator section encircles the contact of the circuit breaker, wherein a fluid channel within the evaporator section is configured such that the working fluid can contact an outer surface of the contact that extends around the contact, and wherein the fluid channel fluidly connects to the fluid conduit.

In this way, cooling of the current carrying contact is further improved, because the working fluid can be heated and turned into the vapour state at a surface encircling the current carrying contact.

In an example, the fluid channel is comprised within the evaporator section.

In an example, the cooling apparatus comprises the current carrying contact, and the fluid channel is comprised within the evaporator section and/or the current carrying contact.

In an example, the fluid channel comprises a copper tube extending around the current carrying contact.

In an example, the working fluid is electrically insulating.

In an example, the working fluid can be a refrigerant such as hydrofluorocarbons (e.g. R134a, R245fa), fluorketones (e.g., NOVEC-649^{™}, commercially available from 3M),

According to an example, the evaporator section is configured to surround at least part of the current carrying contact.

In an example, the evaporator section is configured to surround at least part of the current carrying contact that has a cylindrical shape.

According to an example, the evaporator section is configured such that the liquid fluid within the evaporator section can contact the outer surface of the current carrying contact.

In other words, the liquid fluid actually contacts the current carrying contact.

In an example, the evaporator section comprises a cylindrical shape.

According to an example, the fluid phase separator comprises a second part 4b positioned within a portion of the evaporator section adjoining the fluid conduit. An outer surface of the second part facing away from the at least part of the current carrying contact is spaced from an inner surface of the evaporator section to form a third channel fluidly connected to the first channel. An inner surface of the second part facing toward the at least part of the current carrying contact is spaced from an inner surface of the evaporator section and/or spaced from an outer surface of the at least part of the current carrying contact to form a fourth channel fluidly connected to the second channel. The cooling apparatus is configured such that in use the vapour is transferred from the evaporator section to the fluid conduit at least partially via the fourth channel and the condensed liquid fluid is passively returned via the fluid conduit to the evaporator section at least partially via the third channel.

According to an example, the second part of the fluid phase separator comprises a curved shape.

According to an example, the curved shape is configured to conform to a cylindrical shape of the current carrying contact.

According to an example, the second part of the fluid phase separator comprises at least one hole or tube or slot 4c connecting the outer surface of the second part to the inner surface of the second part. The condensed liquid fluid is passively returned via the fluid conduit to the evaporator section at least partially via the at least one hole or tube or slot.

According to an example, the part of the fluid phase separator positioned within the portion of the fluid conduit comprises a cylindrical or conical shape.

The fluid phase separator in an example can be an integral part of the cooling apparatus, such as a thermosyphon.

However, the fluid phase separator can be a separate part, that can for example be retrofitted to cooling apparatuses, such as thermosyphons.

Thus, an exemplar fluid phase separator 4 is for a cooling apparatus for a medium voltage switchgear. The cooling apparatus comprises: an evaporator section 2, a fluid conduit 3, and a condenser section 5. The evaporator section is configured to contact at least part of a current carrying contact. The evaporator section is configured such that liquid fluid within the evaporator section can thermally contact an outer surface of the current carrying contact. The evaporator section is fluidly connected to the fluid conduit. The fluid conduit is fluidly connected to the condenser section. The fluid phase separator comprises a part 4a configured to be positioned within a portion of the fluid conduit adjoining the evaporator section. The part 4a comprises an open ended hollow tube-like shape. An outer surface of the tube-like shape is configured to be spaced from an inner surface of the fluid conduit to form a first channel and the centre of the tube-like shape is configured to form a second channel. The fluid phase separator is configured such that in use with the cooling apparatus:
- the liquid fluid in the evaporator section is heated to a vapour state,
- the vapour is transferred from the evaporator section to the fluid conduit at least partially via the second channel,
- the vapour is transferred by the fluid conduit to the condenser section,
- the vapour in the condenser section is condensed to the liquid fluid, and
- the condensed liquid fluid is passively returned via the fluid conduit to the evaporator section at least partially via the first channel.

In an example, the evaporator section is configured to surround at least part of the current carrying contact.

In an example, the evaporator section is configured to surround at least part of the current carrying contact that has a cylindrical shape.

In an example, the evaporator section is configured such that the liquid fluid within the evaporator section can contact the outer surface of the current carrying contact.

In an example, the evaporator section comprises a cylindrical shape.

According to an example, the fluid phase separator comprises a second part 4b configured to be positioned within a portion of the evaporator section adjoining the fluid conduit. An outer surface of the second part 4b facing away from the at least part of the current carrying contact is configured to be spaced from an inner surface of the evaporator section to form a third channel fluidly connected to the first channel. An inner surface of the second part facing toward the at least part of the current carrying contact is configured to be spaced from an inner surface of the evaporator section and/or spaced from an outer surface of the at least part of the current carrying contact to form a fourth channel fluidly connected to the second channel. The fluid phase separator is configured such that in use with the cooling apparatus the vapour is transferred from the evaporator section to the fluid conduit at least partially via the fourth channel and the condensed liquid fluid is passively returned via the fluid conduit to the evaporator section at least partially via the third channel.

According to an example, the second part of the fluid phase separator comprises a curved shape.

According to an example, the curved shape is configured to conform to a cylindrical shape of the current carrying contact.

According to an example, the second part of the fluid phase separator comprises at least one hole or tube or slot 4c connecting the outer surface of the second part to the inner surface of the second part. The fluid phase separator is configured such that in use with the cooling apparatus the condensed liquid fluid is passively returned via the fluid conduit to the evaporator section at least partially via the at least one hole or tube or slot.

According to an example, the part of the fluid phase separator positioned within the portion of the fluid conduit comprises a cylindrical or conical shape.

A method of cooling at least one part of a medium voltage or high voltage switchgear with a cooling apparatus is now described. The cooling apparatus comprises: an evaporator section 2, a fluid conduit 3, a fluid phase separator 4, and a condenser section 5. The evaporator section is configured to contact at least part of a current carrying contact. The evaporator section is configured such that liquid fluid within the evaporator section can thermally contact an outer surface of the current carrying contact. The evaporator section is fluidly connected to the fluid conduit. The fluid conduit is fluidly connected to the condenser section. The fluid phase separator comprises a part 4a positioned within a portion of the fluid conduit adjoining the evaporator section. The part 4a of the fluid phase separator positioned within the portion of the fluid conduit adjoining the evaporator section comprises an open ended hollow tube-like shape. An outer surface of the tube-like shape is spaced from an inner surface of the fluid conduit to form a first channel and the centre of the tube-like shape forms a second channel. The method comprises:
- heating the liquid fluid in the evaporator section to a vapour state,
- transferring the vapour from the evaporator section to the fluid conduit at least partially via the second channel,
- transferring the vapour by the fluid conduit to the condenser section,
- condensing the vapour in the condenser section to the liquid fluid, and
- passively returning the condensed liquid fluid via the fluid conduit to the evaporator section at least partially via the first channel.

In an example, the evaporator section is configured to surround at least part of the current carrying contact.

In an example, the evaporator section is configured to surround at least part of the current carrying contact that has a cylindrical shape.

In an example, the evaporator section is configured such that the liquid fluid within the evaporator section can contact the outer surface of the current carrying contact.

In an example, the evaporator section comprises a cylindrical shape.

In an example, the fluid phase separator comprises a second part 4b positioned within a portion of the evaporator section adjoining the fluid conduit. An outer surface of the second part 4b facing away from the at least part of the current carrying contact is spaced from an inner surface of the evaporator section to form a third channel fluidly connected to the first channel. An inner surface of the second part facing toward the at least part of the current carrying contact is spaced from an inner surface of the evaporator section and/or spaced from an outer surface of the at least part of the current carrying contact to form a fourth channel fluidly connected to the second channel. The method comprises transferring the vapour from the evaporator section to the fluid conduit at least partially via the fourth channel and passively returning the condensed liquid fluid via the fluid conduit to the evaporator section at least partially via the third channel.

In an example, the second part of the fluid phase separator comprises a curved shape.

In an example, the curved shape is configured to conform to a cylindrical shape of the current carrying contact.

In an example, the second part of the fluid phase separator comprises at least one hole or tube or slot 4c connecting the outer surface of the second part to the inner surface of the second part. The method comprises passively returning the condensed liquid fluid via the fluid conduit to the evaporator section at least partially via the at least one hole or tube or slot.

In an example, the part of the fluid phase separator positioned within the portion of the fluid conduit comprises a cylindrical or conical shape.

The cooling apparatus for a medium voltage or high voltage switchgear, the fluid phase separator, and method of cooling at least one part of a medium voltage or high voltage switchgear with a cooling apparatus, are further described in specific detail, where reference is again made to Figs. 2-5.

The new development eliminates the entrainment limit or, at least, shifts it to higher heat loads, therefore extending the operation range of the thermosyphon.

The new development makes use of a fluid phase separator **4,** which in a specific embodiment consists of a tubular "neck"-element **4a** and a "shoulders"-type bent stripe **4b.** The separator **4** is inserted into the lower part of the thermosyphon such that the "neck" **4a** fits into the fluid conduit **3,** and the shoulders **4b** run parallel to a wall **2a** of the evaporator maintaining a gap to wall **2a**, as illustrated in Fig. 2.

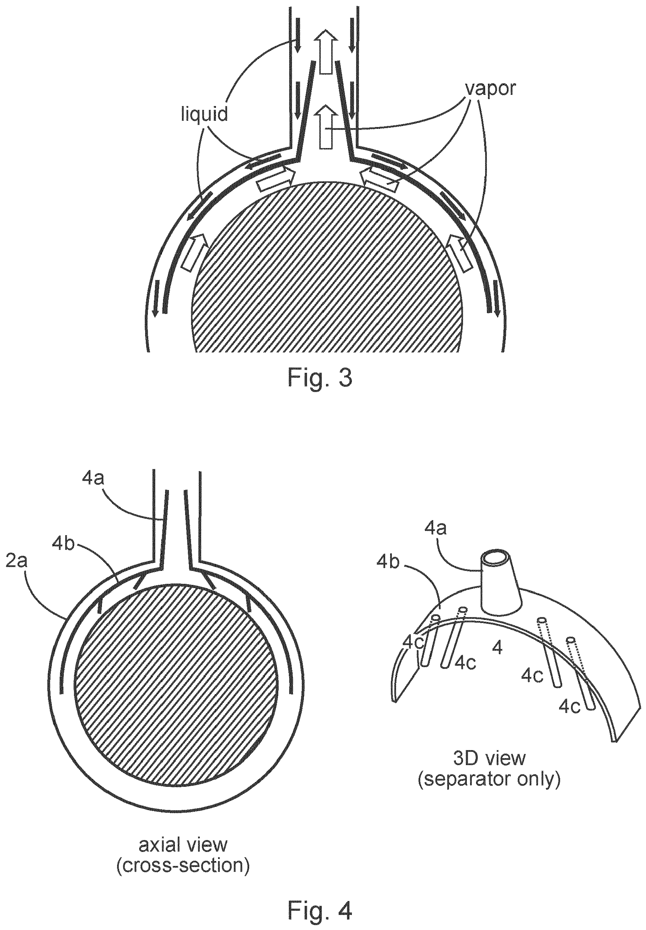

The operation principle is illustrated in Fig. 3. The liquid returns by gravity from the condenser to the evaporator on the walls of fluid conduit **3,** while the vapor rises from the evaporator to the condenser mainly in the center of the fluid conduit **3.** When the liquid enters evaporator **2,** it flows between the shoulders **4b** and the wall **2a** of evaporator **2** without direct contact with the vapor which moves in the opposite direction. Eventually, the liquid flows into the pool of boiling liquid in the bottom part of the evaporator. This considerably reduces entrainment of the liquid by the counterflow of the vapor.

Thus looking at Figs. 2-3, the space between the part 4a of the separator 4 and the inner wall of the fluid conduit 3 forms a first channel, whilst the sente of the part 4a of the separator forms a second channel. As shown in Fig. 3 the condensed liquid fluid flows downwards to the evaporator section 2 through the first channel, whilst the evaporated fluid flows upwards through the second channel. These flows are separated and the upward flow of evaporated fluid does not inhibit or entrain the downward flow of liquid fluid.

The second part 4b of the separator operates in a similar manner. As shown in Figs. 2-3, a third channel connected to the first channel is formed by the space between the shoulders of the second part and the inside of the cylindrical evaporator and the liquid fluid flows around this channel. As the same time a fourth channel is formed on the inside of the second part 4b between the shoulders and the cylindrically shaped current carrying part, and the fluid flows around and upwards in this channel and onwards to the second channel. Thus, the separation of liquid and vapour is provide around the current carrying contact, further improving higher heat load performance.

Variations on the fluid phase separator 4 shown in Figs. 2-3 are possible.

The neck 4a can have a shape which is not necessarily conical or cylindrical.

Shoulders 4b may have surface with some grooves, holes etc., if needed.

The fluid phase separator 4 may but integrated into the structure of the thermosyphon, rather than to be an insertable separate part.

Small gaps can be left between the shoulders 4b and walls 2b of evaporator 2. Thus, referring to Fig. 2 and the side view, the shoulder 4b that is shown abutting the side wall 2b need not extend all the way to the side wall, but there can be a gap enabling to liquid fluid to flow in this gap and flow to the conductor without having to flow all the way to the ends of the shoulder 4b of the fluid phase separator. This would allow to deliver some fluid not only to the boiling pool at the bottom of the evaporator, but also to the upper part of the evaporator, improving its cooling performance.

Other ways to deliver liquid to the upper part of evaporator 2 can be by including additional liquid guides 4c, having a tubular form (as illustrated in Fehler! Verweisquelle konnte nicht gefunden werden.) or a continuous channel form (as illustrated in Fehler! Verweisquelle konnte nicht gefunden werden.) or some other forms.

Fluid separator with neck 4a only without shoulders 4b, inserted into fluid conduit 3, is also possible, with potential for mitigation of the liquid entrainment - however, utilization of shoulders improves the entrainment mitigation.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A cooling apparatus for a medium voltage or high voltage switchgear, the cooling apparatus comprising:
- an evaporator section (2); a fluid conduit (3); a fluid phase separator (4); and a condenser section (5);
wherein, the evaporator section is configured to contact at least part of a current carrying contact;
wherein, the evaporator section is configured such that liquid fluid within the evaporator section can thermally contact an outer surface of the current carrying contact;
wherein, the evaporator section is fluidly connected to the fluid conduit;
wherein, the fluid conduit is fluidly connected to the condenser section;
wherein, the fluid phase separator comprises a part (4a) positioned within a portion of the fluid conduit adjoining the evaporator section;
wherein, the part of the fluid phase separator positioned within the portion of the fluid conduit adjoining the evaporator section comprises an open ended hollow tube-like shape, and wherein an outer surface of the tube-like shape is spaced from an inner surface of the fluid conduit to form a first channel and wherein the centre of the tube-like shape forms a second channel; and
wherein, the cooling apparatus is configured such that in use:
the liquid fluid in the evaporator section is heated to a vapour state,
the vapour is transferred from the evaporator section to the fluid conduit at least partially via the second channel,
the vapour is transferred by the fluid conduit to the condenser section,
the vapour in the condenser section is condensed to the liquid fluid, and
the condensed liquid fluid is passively returned via the fluid conduit to the evaporator section at least partially via the first channel.

2. Cooling apparatus according to claim 1, wherein the evaporator section is configured to surround at least part of the current carrying contact.

3. Cooling apparatus according to any of claims 1-2, wherein, the evaporator section is configured such that the liquid fluid within the evaporator section can contact the outer surface of the current carrying contact.

4. Cooling apparatus according to any of claims 1-3, wherein the fluid phase separator comprises a second part (4b) positioned within a portion of the evaporator section adjoining the fluid conduit, wherein an outer surface of the second part facing away from the at least part of the current carrying contact is spaced from an inner surface of the evaporator section to form a third channel fluidly connected to the first channel, wherein an inner surface of the second part facing toward the at least part of the current carrying contact is spaced from an inner surface of the evaporator section and/or spaced from an outer surface of the at least part of the current carrying contact to form a fourth channel fluidly connected to the second channel, wherein, the cooling apparatus is configured such that in use the vapour is transferred from the evaporator section to the fluid conduit at least partially via the fourth channel and the condensed liquid fluid is passively returned via the fluid conduit to the evaporator section at least partially via the third channel.

5. Cooling apparatus according to claim 4, wherein the second part of the fluid phase separator comprises a curved shape.

6. Cooling apparatus according to claim 5, wherein the curved shape is configured to conform to a cylindrical shape of the current carrying contact.

7. Cooling apparatus according to any of claims 4-6, wherein the second part of the fluid phase separator comprises at least one hole or tube or slot (4c) connecting the outer surface of the second part to the inner surface of the second part, and wherein the condensed liquid fluid is passively returned via the fluid conduit to the evaporator section at least partially via the at least one hole or tube or slot.

8. Cooling apparatus according to any of claims 1-7,
wherein the part of the fluid phase separator positioned within the portion of the fluid conduit comprises a cylindrical or conical shape.

9. A fluid phase separator (4) for a cooling apparatus for a medium voltage switchgear, the cooling apparatus comprising: an evaporator section (2), a fluid conduit (3), and a condenser section (5), wherein the evaporator section is configured to contact at least part of a current carrying contact, wherein the evaporator section is configured such that liquid fluid within the evaporator section can thermally contact an outer surface of the current carrying contact, wherein the evaporator section is fluidly connected to the fluid conduit; wherein the fluid conduit is fluidly connected to the condenser section; and
wherein the fluid phase separator comprises a part (4a) configured to be positioned within a portion of the fluid conduit adjoining the evaporator section, wherein the part comprises an open ended hollow tube-like shape;
wherein an outer surface of the tube-like shape is configured to be spaced from an inner surface of the fluid conduit to form a first channel and wherein the centre of the tube-like shape is configured to form a second channel; and
wherein the fluid phase separator is configured such that in use with the cooling apparatus: the liquid fluid in the evaporator section is heated to a vapour state, the vapour is transferred from the evaporator section to the fluid conduit at least partially via the second channel, the vapour is transferred by the fluid conduit to the condenser section, the vapour in the condenser section is condensed to the liquid fluid, and the condensed liquid fluid is passively returned via the fluid conduit to the evaporator section at least partially via the first channel.

10. Fluid phase separator according to claim 9, wherein the fluid phase separator comprises a second part (4b) configured to be positioned within a portion of the evaporator section adjoining the fluid conduit, wherein an outer surface of the second part facing away from the at least part of the current carrying contact is configured to be spaced from an inner surface of the evaporator section to form a third channel fluidly connected to the first channel, wherein an inner surface of the second part facing toward the at least part of the current carrying contact is configured to be spaced from an inner surface of the evaporator section and/or spaced from an outer surface of the at least part of the current carrying contact to form a fourth channel fluidly connected to the second channel, wherein the fluid phase separator is configured such that in use with the cooling apparatus the vapour is transferred from the evaporator section to the fluid conduit at least partially via the fourth channel and the condensed liquid fluid is passively returned via the fluid conduit to the evaporator section at least partially via the third channel.

11. Fluid phase separator according to claim 10, wherein the second part of the fluid phase separator comprises a curved shape.

12. Fluid phase separator according to claim 11, wherein the curved shape is configured to conform to a cylindrical shape of the current carrying contact.

13. Fluid phase separator according to any of claims 9-12, wherein the second part of the fluid phase separator comprises at least one hole or tube or slot (4c) connecting the outer surface of the second part to the inner surface of the second part, and wherein the fluid phase separator is configured such that in use with the cooling apparatus the condensed liquid fluid is passively returned via the fluid conduit to the evaporator section at least partially via the at least one hole or tube or slot.

14. Fluid phase separator according to any of claims 9-13, wherein the part of the fluid phase separator positioned within the portion of the fluid conduit comprises a cylindrical or conical shape.

15. A method of cooling at least one part of a medium voltage or high voltage switchgear with a cooling apparatus, the cooling apparatus comprising: an evaporator section (2); a fluid conduit (3); a fluid phase separator (4); and a condenser section (5);
wherein, the evaporator section is configured to contact at least part of a current carrying contact;
wherein, the evaporator section is configured such that liquid fluid within the evaporator section can thermally contact an outer surface of the current carrying contact;
wherein, the evaporator section is fluidly connected to the fluid conduit;
wherein, the fluid conduit is fluidly connected to the condenser section;
wherein, the fluid phase separator comprises a part (4a) positioned within a portion of the fluid conduit adjoining the evaporator section;
wherein, the part of the fluid phase separator positioned within the portion of the fluid conduit adjoining the evaporator section comprises an open ended hollow tube-like shape, and wherein an outer surface of the tube-like shape is spaced from an inner surface of the fluid conduit to form a first channel and wherein the centre of the tube-like shape forms a second channel; and
wherein, the method comprises:
- heating the liquid fluid in the evaporator section to a vapour state,
- transferring the vapour from the evaporator section to the fluid conduit at least partially via the second channel,
- transferring the vapour by the fluid conduit to the condenser section,
- condensing the vapour in the condenser section to the liquid fluid, and
- passively returning the condensed liquid fluid via the fluid conduit to the evaporator section at least partially via the first channel.
